# FASCICULE DE BREVET EUROPEEN

(11) **EP 0 717 052 B1**
(45) Date de publication et mention de la délivrance du brevet: **13.01.1999**
(21) Numéro de dépôt: 95117894.6
(22) Date de dépôt: 14.11.1995
(51) Int. Cl.: C08F 10/00, C08F 4/654

(54) **Composante catalytique pour la polymérisation des oléfines, son procédé de fabrication, et procédé de polymérisation des oléfines en présence de ladite composante catalytique**
Katalysatorkomponente für Olefinpolymerisation, Verfahren zur deren Herstellung und Verfahren zur Polymerisation von Olefinen unter Anwendung derselben
Catalyst component for olefin polymerization, process for the production thereof and process for the polymerization of olefins using the same

(30) Priorité: 16.12.1994 FR 9415171
(43) Date de publication de la demande: 19.06.1996
(73) Titulaire: APPRYL S.N.C., F-92400 Courbevoie (FR)
(72) Inventeur: Brusson, Jean-Michel, F-64320 Idron (FR); Duranel, Laurent, F-64370 Arthez de Bearn (FR)
(74) Mandataire: Rochet, Michel

(56) Documents cités:
- EP-A- 0 360 491
- EP-A- 0 437 264
- MACROMOLECULAR SYMPOSIA, vol. 89, Janvier 1995,, pages 125 - 138, XP000509162 TAIT PETER J. T. 'Comparative kinetic and active centre studies on MgCl2 supported catalysts in propylene polymerization'
- DATABASE WPI Derwent Publications Ltd., London, GB; AN 93-003886 & JP-A-04 331 210 (CHISSO CORPORATION) , 19 Novembre 1992

## Description

La présente invention concerne une nouvelle composante catalytique solide pour la polymérisation des oléfines et permettant de synthétiser des polyoléfines aux distributions des masses moléculaires élargies.

La présente invention concerne également un procédé de fabrication de ladite composante catalytique solide, ainsi qu'un procédé de polymérisation des oléfines en présence de ladite composante catalytique solide.

Pour la fabrication de films en polyoléfine, il est préférable de disposer de polyoléfines présentant des masses moléculaires élargies. La polyoléfine destinée à être transformée en film doit contenir de préférence des molécules de haute masse moléculaire car ce sont ces molécules qui assurent la continuité du film et préviennent son déchirement lors de son étirement. Une polyoléfine contient des molécules de haute masse moléculaire si le rapport de la masse moléculaire moyenne en z (représentée par Mz) sur la masse moléculaire moyenne en poids (représentée par Mw) est élevée. Si la polyoléfine ne contenait que des molécules de haute masse moléculaire, sa transformation en film deviendrait difficile étant donné les fortes températures nécessaires pour sa fabrication. C'est la raison pour laquelle il est préférable que la polyoléfine contienne également des molécules de faible masse moléculaire. Une polyoléfine contient des molécules de faible masse moléculaire si le rapport de la masse moléculaire moyenne en poids (représentée par Mw) sur la masse moléculaire moyenne en nombre (représentée par Mn) est élevée et par exemple supérieure à 5,5.

Par ailleurs, il est souhaitable d'améliorer encore l'aptitude à la transformation en film en réduisant la cristallinité de la polyoléfine.

En effet, l'abaissement de la cristallinité se traduit d'une part par une baisse du module d'élasticité, ce qui diminue la rigidité du film et améliore sa résistance aux contraintes lors de l'étirement ou lors de son utilisation finale, et d'autre part par une réduction de l'influence de la température sur les propriétés rhéologiques de la matière en cours d'étirement, ce qui facilite le contrôle de la qualité du produit final.

Une polyoléfine est moins cristalline si elle présente une solubilité élevée dans l'heptane. Pour l'application film, on préfère donc une polyoléfine présentant un faible indice d'insolubilité dans l'heptane (représenté par HI de l'expression "heptane insoluble"), par exemple inférieur à 97 % en poids, et mieux, inférieur à 94 % en poids.

Cet indice ne doit cependant pas être trop faible, car sinon le polymère est collant et devient de ce fait difficile à convoyer. Cet indice est de préférence supérieur à 80 % en poids, et de manière encore préférée supérieur à 90 % en poids.

La synthèse de polyoléfines contenant à la fois des molécules de forte masse et des molécules de faible masse, le cas échéant présentant un HI adapté au sens ci-dessus donné par un procédé productif, c'est-à-dire dont la productivité est la plus forte possible et, dans le cas de la polymérisation du propylène, d'au moins 20 000 grammes de polymère par gramme de composante catalytique solide et par heure, est particulièrement difficile sans recourir à des mélanges subséquents à la fabrication des polyoléfines.

La demande de brevet EP 0385 765 A2 enseigne qu'il est possible d'élargir la distribution des masses moléculaires de polypropylène en introduisant deux sortes de silanes dans le milieu de polymérisation. Ce document décrit des polymérisations en présence de composantes catalytiques contenant 2,5 % en poids de titane et 13,8 % en poids de diisobutylphtalate.

La demande de brevet EP 0350170 enseigne que du polypropylène très isotactique peut être obtenu par polymérisation du propylène en présence d'une composante catalytique solide contenant 2,2 % en poids de titane et en présence d'un silane en tant que donneur externe d'électrons.

La demande de brevet WO 91/14718 montre que du polypropylène à la distribution des masses moléculaires élargie peut être obtenu en réalisant la polymérisation à l'aide de plusieurs réacteurs montés en cascade.

La présente invention concerne une composante catalytique solide pour la polymérisation des oléfines, permettant d'obtenir des polymères ou copolymères présentant un fort Mz/Mw, généralement supérieur à 3, et un fort Mw/Mn, généralement supérieur à 5,5. De plus, lorsqu'ils sont issus d'au moins un monomère contenant au moins trois atomes de carbone, ces polymères ou copolymères présentent, généralement, un HI allant de 85 à 97 % en poids et pouvant même aller de 90 à 94 % en poids. De plus, la composante catalytique solide selon l'invention présente une forte activité. Ces objectifs sont atteints sans qu'il ne soit nécessaire d'introduire deux silanes pendant la polymérisation, et sans qu'il ne soit nécessaire de faire appel à plusieurs réacteurs montés en cascade.

La composante catalytique solide selon l'invention comprend des atomes de magnésium, de titane et d'halogène, de préférence de chlore, et comprend un diester de l'acide phtalique dont les groupement hydrocarbonés des fonctions esters, pouvant être identiques ou différents, sont saturés, linéaires ou ramifiés et contiennent de un à huit atomes de carbone, le titane se trouvant sous forme au moins partiellement halogénée, de préférence chlorée, et sous le degré d'oxydation trois et/ou quatre et est caractérisée en ce que le titane y est présent à raison d'au moins 2,5 % en poids et en ce que le diester de l'acide phtalique y est présent à raison de moins de 7 % en poids.

De préférence, la teneur en titane va 3 à 5 % en poids.

De préférence, la teneur en diester est supérieure à 2 % en poids, et mieux, va de 3 à 6 % en poids.

Le diester de l'acide phtalique peut par exemple être choisi parmi les composés suivants : le diéthylphtalate, le diisobutylphtalate, le di-n-butylphtalate, le dihexylphtalate, le dioctylphtalate.

Les dibutylphtalates sont des diesters préférés.

Il n'est pas exclu que la composante catalytique selon l'invention contienne une base de Lewis ne faisant pas partie de la famille des diesters entrant dans la composition de la composante catalytique selon l'invention. Cette base de Lewis peut être un composé organique liquide ou solide connu pour entrer dans la composition des composantes catalytiques de type Ziegler-Natta. Cette base de Lewis peut être choisie parmi les acides carboxyliques aliphatiques ou aromatiques et leurs esters alkyliques, les éthers aliphatiques ou cycliques, les cétones, les esters vinyliques, les dérivés acryliques, en particulier acrylates d'alkyle ou méthacrylates d'alkyle, les alcools. Conviennent notamment comme base de Lewis les composés tels que paratoluate de méthyle, benzoate d'éthyle, acétate d'éthyle ou de butyle, éther éthylique, para-anisate d'éthyle, tétrahydrofurane, dioxane, acétone, méthylisobutylcétone, acétate de vinyle, méthacrylate de méthyle, l'éthanol, le butanol. Cette base de Lewis peut être présente dans la composante catalytique selon l'invention à raison de 0,01 à 8 % en poids. Le tétrahydrofurane (THF) est une base de Lewis préférée.

De préférence, le tétrahydrofurane est présent à raison de 0,3 à 1 % en poids dans la composante catalytique solide selon l'invention.

Toutes les techniques connues pour fabriquer des composantes catalytiques solides de type Ziegler-Natta contenant des atomes de magnésium, d'halogène de titane et un ester de l'acide phtalique peuvent être adaptées pour la synthèse de la composante catalytique selon l'invention du moment que ces procédés peuvent être modifiés au niveau de la quantité de dérivé du titane introduite et au niveau de la quantité d'ester de l'acide phtalique introduite, de façon à obtenir les teneurs en titane et en diester de l'acide phtalique caractérisant la composante catalytique solide selon l'invention. En utilisant les techniques connues dans leur principe pour réaliser des composantes catalytiques de type Ziegler-Natta, l'homme du métier peut réaliser la composante catalytique selon l'invention après avoir réalisé quelques tests de routine portant essentiellement sur la quantité de dérivé du titane et sur la quantité de diester de l'acide phtalique à mettre en jeu de façon à aboutir à la composante catalytique solide selon l'invention. De préférence, la composante catalytique solide est à base de MgCl₂, c'est-à-dire qu'elle contient au moins 60 % en poids de MgCl₂. Ceci est généralement obtenu lorsqu'on utilise du MgCl₂ comme support de la composante catalytique.

La composante catalytique solide selon l'invention peut être le résultat de la combinaison d'au moins un composé du titane, un composé du magnésium, de chlore, éventuellement un composé d'aluminium, un diester de l'acide phtalique dont les groupements hydrocarbonés des fonctions esters, pouvant être identiques ou différents, contiennent de un à huit atomes de carbone, éventuellement une base de Lewis, ainsi que de tout autre composé utilisable dans les composantes solides de type Ziegler-Natta.

Le composé du titane peut être choisi parmi les composés chlorés du titane de formule Ti-(OR)ₓCl₄₋ₓ dans laquelle R représente un radical hydrocarboné aliphatique ou aromatique contenant de un à quatorze atomes de carbone, ou représente COR¹ avec R¹ représentant un radical hydrocarboné aliphatique ou aromatique contenant de un à quatorze atomes de carbone et x représente un nombre entier allant de 0 à 3.

Le composé du magnésium peut être choisi parmi les composés de formule Mg(OR²)ₙCl₂₋ₙ dans laquelle R² représente l'hydrogène ou un radical hydrocarboné linéaire ou cyclique et n représente un nombre entier allant de 0 à 2.

Le chlore présent dans la composante catalytique solide peut provenir directement de l'halogénure de titane et/ou de l'halogénure de magnésium. Il peut également provenir d'un agent chlorant indépendant tel que l'acide chlorhydrique, le tétrachlorure de silicium ou un halogénure organique comme le chlorure de butyle.

Parmi les techniques adaptées à la synthèse de la présente composante solide, on préfère celles faisant intervenir une mise en contact entre d'une part, un complexe entre MgCl₂ et un solvant complexant de MgCl₂, que l'on représente par (MgCl_{2·}solvant complexant), et d'autre part un dérivé du titane et le diester de l'acide phtalique. Si le solvant complexant est une base de Lewis pouvant entrer dans la composition de la composante catalytique solide selon l'invention, il est possible de laisser une partie de ce solvant complexant dans ladite composante pour faire office de base de Lewis. Les composantes catalytiques solides réalisées de cette façon sont à base de MgCl₂ en ce sens qu'elles contiennent généralement au moins 60 % en poids de MgCl₂, lequel fait office de support.

Si une base de Lewis B choisie pour être intégrée dans la composante catalytique solide selon l'invention est un solvant complexant de MgCl₂, et si l'on choisi de réaliser la composante solide en faisant intervenir la mise en contact qui vient d'être décrite, il est préférable pour ladite mise en contact, d'utiliser un complexe (MgCl₂.B) dans lequel le rapport molaire B sur MgCl₂ est compris entre 1 et 2, et mieux, entre 1,4 et 1,7. Pour obtenir un tel complexe, il est préférable de mettre en présence du MgCl₂ et B de telle sorte que le rapport molaire B sur MgCl₂ soit supérieur à 4, et de manière encore préféré supérieure à 7, puis procéder à un lavage du solide ainsi obtenu à l'aide d'un solvant S pour aboutir au rapport souhaité dans le complexe avant mise en contact. La mise en présence entre MgCl₂ et B peut être réalisée à une température comprise entre Teb -30°C et Teb +40°C, Teb représentant la température d'ébullition de B à la pression atmosphérique. Elle peut être réalisée en présence d'un solvant inerte, mais de préférence ce solvant inerte n'est pas présent en plus forte masse que celle de B. De préférence, le solvant S solubilise moins de 1000 ppm de MgCl₂ à la température du lavage mais est miscible avec la base de Lewis B à ladite température de lavage. On peut citer comme solvant S les hydrocarbures aliphatiques, alicycliques ou aromatiques, tels que l'heptane, l'hexane , le cyclohexane, le toluène, le xylène,le benzène. Le lavage par S peut être réalisé à une température comprise entre 20 et 150°C, et mieux entre 50 et 80°C.

En particulier, cette dernière technique est préférable à celle consistant à imprégner du MgCl₂ par la base de Lewis B de façon à directement obtenir un support à base de MgCl₂ contenant la teneur souhaitée en base de Lewis B avant mise en contact.

Le diester de l'acide phtalique peut être mis en contact avec le complexe (MgCl_{2·}solvant complexant) avant, après ou en même temps que le dérivé du titane. Le principe de cette technique est décrit dans la demande de brevet EP 488 856. Par rapport à la technique décrite dans ce document, il convient de modifier les quantités de dérivé du titane et de diester de l'acide phtalique de façon à aboutir à la composition de la composante catalytique de MgCl₂ selon l'invention.

Comme solvant complexant de MgCl₂, on peut utiliser le dioxane, mais on préfère le tétrahydrofurane, lequel est également une base de Lewis préférée.

La présente invention concerne également un procédé de polymérisation d'au moins une oléfine en présence de la composante catalytique selon l'invention.

De préférence, lorsque le milieu de polymérisation contient une oléfine contenant au moins trois atomes de carbone tel que le propylène, le milieu de polymérisation contient un silane de formule Si R¹R²R³R⁴ dans laquelle l'un au moins des groupements lié au silicium est un groupement alkoxyde de formule (-OR⁵) dans laquelle R⁵ représente un groupement hydrocarboné saturé linéaire contenant 1 à 4 atomes de carbone, et de préférence 1 ou 2 atomes de carbone, les autres groupements liés au silicium étant des groupements hydrocarbonés contenant de préférence 1 à 8 atomes de carbone, l'un au moins de ces groupements comportant au mois quatre atomes de carbone. Si l'on souhaite obtenir un polymère ou copolymère au HI supérieur à 90% en poids on préfere que deux des groupements liés au silicium, lesquels peuvent être identiques ou différents, soient des groupements alkoxydes de formule (- OR⁵) comme ci-dessus définis, et de manière encore préférée, en plus de la présence des deux groupements alkoxydes, l'un au moins des groupements liés au silicium est un radical cyclopentyle. On peut citer comme silanes préférés le méthylcyclopentyldiméthoxysilane, l'éthylcyclopentyldiméthoxysilane, l'isopropylcyclopentyldiméthoxysilane, l'isobutylcyclopentyldiméthoxysilane, le dicyclopentyldiméthoxysilane.

Le silane est généralement introduit à raison de 1.10⁻⁴ à 0,2 millimole par mole d'oléfine à polymériser ou copolymériser.

Lorsque c'est un dérivé organique de l'aluminium qui est présent dans le milieu de polymérisation en tant que cocatalyseur (voir ci-après), on préfère introduire le silane en quantité telle que le rapport molaire Al/Sᵢ soit compris entre 5 et 200 et mieux encore entre 10 et 80.

Lorsque le milieu de polymérisation contient une oléfine contenant au moins trois atomes de carbone comme le propylène, la combinaison d'une part, d'une composante catalytique solide selon l'invention contenant de 3 à 5 % en poids de titane, de 3 à 6 % de diester de l'acide phtalique et de 0,3 à 1% en poids de tétrahydrofurane et d'autre part, de dicyclopentyldimethoxysilane en tant que donneur externe d'électron dans le milieu de polymérisation et d'un dérivé organique de l'aluminium en tant que cocatalyseur dans le milieu de polymérisation est une combinaison préférée car cette combinaison permet l'obtention d'un excellent ensemble de propriétés.

Des polymères peuvent être obtenus par polymérisation d'au moins une oléfine en présence de la composante catalytique selon l'invention par les procédés en suspension, en solution, en phase gazeuse ou en masse. Les oléfines pouvant être utilisées pour la polymérisation, sont par exemple les oléfines comportant de deux à vingt atomes de carbone et en particulier les alpha-oléfines de ce groupe. Comme oléfine, on peut citer l'éthylène, le propylène, le 1-butène, le 4-méthyl-1-pentène, le 1-octène, le 1-hexène, le 3-méthyl-1-pentène, le 3-méthyl-1-butène, le 1-décène, le 1-tétradécène, ou leurs mélanges. Le terme polymérisation dont il est fait usage dans la présente demande recouvre donc des réactions de copolymérisation, et le terme polymère recouvre des copolymères.

Parmi les mélanges d'alpha-oléfine, on préfère un mélange d'éthylène et d'au moins une alpha-oléfine contenant de trois à huit atomes de carbone, le pourcentage d'éthylène dans le mélange étant généralement supérieur à 90 % en poids.

Les polymères obtenus présentent généralement une masse moléculaire moyenne en poids comprise entre 80000 et 400000 grammes par mole.

Un procédé de polymérisation en masse consiste à réaliser une polymérisation dans l'une au moins des oléfines à polymériser maintenue à l'état liquide ou hypercritique.

Les procédés de polymérisation en solution ou en suspension consistent à réaliser une polymérisation en solution ou en suspension dans un milieu inerte et notamment dans un hydrocarbure aliphatique.

Pour un procédé de polymérisation en solution, on peut utiliser par exemple un hydrocarbure contenant de huit à douze atomes de carbone ou un mélange de ces hydrocarbures. Pour un procédé de polymérisation en suspension, on peut utiliser par exemple le n-heptane, le n-hexane, l'isohexane ou l'isobutane.

Les conditions opératoires pour ces procédés de polymérisation en masse, en solution, en suspension ou en phase gazeuse sont celles qui sont habituellement proposées pour des cas similaires faisant appel à des systèmes catalytiques conventionnels de type Ziegler Natta supporté ou non.

Par exemple pour un procédé de polymérisation en suspension ou en solution, on peut opérer à des températures allant jusqu'à 250°C et sous des pressions allant de la pression atmosphérique à 250 bars. Dans le cas d'un procédé de polymérisation en milieu propylène liquide, les températures peuvent aller jusqu'à la température critique et les pressions peuvent être comprises entre la pression atmosphérique et la pression critique. Pour un procédé de polymérisation en masse conduisant à des polyéthylènes ou à des copolymères majoritaires en éthylène, on peut opérer à des températures comprises entre 130°C et 350°C et sous des pressions allant de 200 à 3500 bars.

Un procédé de polymérisation en phase gazeuse peut être mis en oeuvre à l'aide de tout réacteur permettant une polymérisation en phase gazeuse et en particulier dans un réacteur à lit agité et/ou à lit fluidisé.

Les conditions de mise en oeuvre de la polymérisation en phase gazeuse, notamment température, pression, injection de l'oléfine ou des oléfines dans le réacteur à lit agité et/ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou prépolymère à synthétiser, et plus particulièrement comprise entre +20°C et (Tf-5)°C, et sous une pression telle que l'oléfine ou les oléfines soient essentiellement en phase vapeur.

Un cocatalyseur capable d'activer le titane de la composante catalytique selon l'invention doit être présent pendant la polymérisation. Ce cocatalyseur peut être tout cocatalyseur de composante catalytique solide de type Ziegler-Natta. En particulier, ce cocatalyseur peut être un dérivé organique de l'aluminium.

Ce dérivé organique de l'aluminium peut être un dérivé de formule R¹R²R³Al dans laquelle R¹₁ R² et R³ pouvant être identiques ou différents, représentent chacun, soit un atome d'halogène, soit un groupe alkyl contenant de 1 à 20 atomes de carbone, l'un au moins de R¹, R² ou R³ représentant un groupe alkyl. A titre d'exemple de composé adapté, on peut citer le dichlorure ou dibromure d'éthylaluminium, le dichlorure ou dibromure d'isobutylaluminium, le chlorure ou bromure de diéthylaluminium, le chlorure ou bromure de di-n-propylaluminium, le chlorure ou bromure de diisobutylaluminium. De préférence aux composés précités, on utilise un trialkylaluminium tel que le tri-n-herylaluminium, le triisobutylaluminium, le triméthylaluminium, ou le triéthylaluminium.

Le cocatalyseur peut également être un aluminoxane. Cet aluminoxane peut être linéaire, de formule 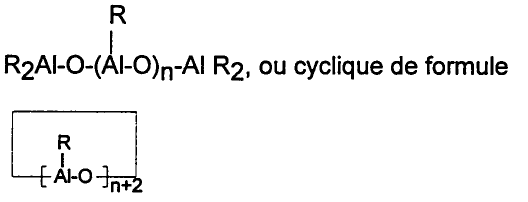 R représentant un radical alkyl comprenant de un à six atomes de carbone, et n étant un nombre entier allant de 2 à 40, de préférence de 10 à 20. L'aluminoxane peut comporter des groupements R de nature différente. De préférence, les groupements R représentent tous des groupements méthyl. Par ailleurs, par cocatalyseur, on entent également les mélanges des composés précités.

Les quantités de cocatalyseur utilisées lors de la polymérisation doivent être suffisantes pour activer le titane. Généralement, on en introduit une quantité telle que le rapport atomique de l'aluminium apporté par le cocatalyseur sur le titane que l'on souhaite activer aille de 0,5 à 10000 et de préférence de 1 à 1000.

Les procédés de polymérisation en solution, en suspension, en masse, ou en phase gazeuse peuvent faire intervenir un agent de transfert de chaînes, de manière à contrôler l'indice de fusion du polymère à produire. Comme agent de transfert de chaîne, on peut utiliser l'hydrogène, que l'on introduit en quantité pouvant aller jusqu'à 90 % et se situant de préférence entre 0,01 et 60 % en mole de l'ensemble oléfine et hydrogène amené au réacteur.

Dans les exemples qui suivent les caractéristiques des polymères ont été déterminées par les techniques suivantes :
- le HI a été déterminé par mesure du pourcentage en poids de polymère insoluble dans l'heptane bouillant dans le polymère considéré. Ceci est réalisé par extraction de la fraction soluble par l'heptane bouillant pendant deux heures dans une appareil de type Kumagawa.
- pour du polypropylène, l'indice de fluidité à 230°C sous 2,16 kg de charge a été déterminé selon la norme ASTM D 1238, méthode L. Il est exprimé en gramme de polymère écoulé en 10 minutes et il est représenté par "MI₂" dans les tableaux.
- pour du polyéthylène, l'indice de fluidité à 190°C sous 2,16 kg de charge a été déterminé selon la norme ASTM D 1238, méthode E. Il est exprimé en gramme de polymère écoulé en 10 minutes et il est représenté par "MI₂" dans les tableaux.
- la productivité est calculée en divisant la masse de polymère obtenu par la masse de composante catalytique solide utilisée.
- la distribution des masses moléculaires a été déterminée par chromatographie d'exclusion stérique en utilisant un système analytique similaire à celui décrit dans la référence suivante : D. LECACHEUX et Coll., Journal of Applied Polymer Science, Vol. 27, 4867 (1982). Les calculs ont été effectuées à partir de masses moléculaires issues d'un étalonnage polystyrène et corrigés grâce aux lois de Mark Houwink. Une troncature des masses inférieures à 2 000 a été réalisée.

### Exemple 1

### a)Préparation d'un support

Dans un réacteur de 300 ml purgé à l'azote muni d'une agitation mécanique à pâle, d'une régulation de température par double enveloppe, on introduit 30 g de MgCl2 anhydre commercial, 4,5 g de 1-2-4-5-tétraméthylbenzène et 200 ml de tétrahydrofurane (THF). La température est portée à 60°C et on laisse agiter pendant 16 heures. Le solide est ensuite filtré et lavé 3 fois avec 100 ml d'hexane à 60°C pendant 15 minutes pour chaque 100 ml d'hexane puis séché sous courant d'azote pendant deux heures. On récupère 54,2 g d'un solide contenant 11,7% en poids de magnésium et 54,3% en poids de THF.

### b)Préparation d'une composante catalytique

Dans un réacteur de 300 ml purgé à l'azote muni d'une agitation tournant à 100 révolutions par min., on introduit à 50°C 13,6 g du support obtenu au a), 44 ml de toluène et 133 ml de TiCl4 pur. La température est portée à 90°C et on introduit alors 0,67 ml de di-n-butylphtalate (DBP). On laisse ce mélange agir pendant deux heures. Après filtration, on procède à une deuxième série de traitements laquelle consiste à effectuer cinq fois de suite ce qui suit: on ajoute sur le solide résultant 18 ml de TiCl4 et 160 ml de toluène, on porte la température à 100°C pendant 1 heure, puis l'on procède à une filtration. Le solide est ensuite lavé 3 fois avec 150 ml d'hexane à 60°C pendant 10 minutes. Le solide est enfin séché sous courant d'azote à 60°C pendant 2 heures. La composante catalytique contient 3,7% en poids de titane, 20,9% en poids de magnésium et 4,3% en poids de di-n-butylphtalate.

### c)Polymérisation en présence de la composante catalytique

Dans un réacteur de 3,5 litres en acier inoxydable, muni d'une agitation magnétique et d'une régulation thermique par double enveloppe, on introduit à 30 °C, dans l'ordre: 1,2 NI d'hydrogène, 2,4 litres de propylène liquide, 24 millimoles de triéthylaluminium et 2,4 millimoles de cyclohexylméthyldiméthoxysilane (CHMDMS).

On laisse agir 10 minutes, puis, 20 mg de la composante catalytique préparée au b) sont injectés dans le réacteur. La température est portée en 10 min. à 70 °C et maintenue pendant une heure à cette valeur. Le réacteur est ensuite refroidi a la température ambiante et la pression abaissée à la pression atmosphérique. On récupère 490 grammes d'une poudre d'indice d'isotacticité de 92,4% en poids.

Le tableau 1 rassemble les caractéristiques de la composantes catalytique obtenue ainsi que celles des polymères obtenus.

### Exemple 2

On opère comme pour l'exemple 1 sauf que l'on introduit 89 ml de toluène et 89 ml de TiCl4 lors du premier traitement du support.

Les résultats sont regroupés dans le tableau 1.

### Exemple 3

La composante catalytique synthétisée dans l'exemple 2 est testée en polymérisation dans les conditions de l'exemple 1 sauf que l'on remplace le cyclohexylméthyldiméthoxysilane par la même quantité de dicyclopentyldiméthoxysilane (DCPDMS). La quantité d'hydrogène mis en oeuvre est dans ce cas de 2,45 NI.

Les résultats sont regroupés dans le tableau 1.

### Exemple 4

On opère comme pour l'exemple 1.

Les résultats sont regroupés dans le tableau 1.

### Exemple 5

La composante catalytique synthétisée dans l'exemple 4 est testée en polymérisation dans les conditions de l'exemple 3. La quantité d'hydrogène mis en oeuvre est dans ce cas de 2,45 NI.

Les résultats sont regroupés dans le tableau 1.

### Exemple comparatif 1

On opère comme pour l'exemple 1 sauf que l'on introduit 3,8 ml de di-n-butylphtalate lors de la préparation de la composante catalytique.

Les résultats sont regroupés dans le tableau 1.

### Exemple comparatif 2

On opère comme pour l'exemple 1 sauf que l'on introduit 2,2 ml de di-n-butylphtalate lors de la préparation de la composante catalytique.

Les résultats sont regroupés dans le tableau 1.

### Exemple comparatif 3

On opère comme pour l'exemple comparatif 2 sauf que lors de la deuxième série de traitements de la composante catalytique, on introduit 9 ml de TiCl4 et 169 ml de toluène.

Les résultats sont regroupés dans le tableau 1.

### Exemple comparatif 4

On opère comme pour l'exemple comparatif 2 sauf que l'on introduit 124 ml de toluène et 53 ml de TiCl4 lors du premier traitement du support.

Les résultats sont regroupés dans le tableau 1.

### Exemple 6

On opère comme pour l'exemple 1 sauf que l'on remplace le di-n-butylphtalate par 0.4 ml de diéthylphtalate (DEP) lors de la préparation de la composante catalytique.

Les résultats sont regroupés dans le tableau 2.

### Exemple 7

La composante catalytique synthétisée dans l'exemple 6 est testée en polymérisation dans les conditions de l'exemple 3. La quantité d'hydrogène mis en oeuvre est dans ce cas de 3,5 NI.

Les résultats sont regroupés dans le tableau 2.

### Exemple comparatif 5

On opère comme pour l'exemple 6 sauf que l'on introduit 1 ml de diéthylphtalate lors de la préparation de la composante catalytique.

Les résultats sont regroupés dans le tableau 2.

### Exemple 8

### a)Préparation d'un support

Dans un réacteur de 120 litres purgé à l'azote muni d'une agitation mécanique à pâle, d'une régulation de température par double enveloppe, on introduit 2,5 kg de MgCl2 anhydre commercial, 370 g de 1-2-4-5-tétra méthyl benzène et 15 kg de tétrahydrofurane (THF). La température est portée à 60°C et on laisse agiter pendant 12 heures. Le solide est ensuite filtré et lavé 4 fois avec 15 litres d'hexane à 60°C pendant 15 minutes puis séché. Le solide obtenu contient 11,8% en poids de magnésium et 53% en poids de THF.

### b)Préparation d'une composante catalytique

Sur la totalité du solide précédemment obtenu, on procède à un premier traitement en introduisant à 25°C 14 kg de toluène et 84 kg de TiCl4 pur. La température est portée à 95°C en une heure et l'on introduit alors 290 g de di-n-butylphtalate. Le traitement se poursuit pendant 2 heures. Après filtration, on réalise une deuxième série de traitements laquelle consiste à réaliser cinq fois de suite ce qui suit: on ajoute sur le solide résultant 11kg de TiCl4 et 51 kg de toluène, on porte la température à 105°C pendant 1 heure et l'on procède à une filtration. Le solide est ensuite lavé 4 fois avec 30 litres d'hexane à 65°C pendant 15 minutes. Le solide est enfin séché sous courant d'azote à 70°C pendant 5 heures. La composante catalytique se présente sous la forme d'une poudre pulvérulente de granulométrie et de morphologie contrôlées. La composante catalytique contient 3,7% en poids de titane, 18,3% en poids de magnésium et 4,1% en poids de di-n-butylphtalate.

### c)Polymérisation en présence de la composante catalytique

Dans un réacteur de 8 litres en acier inoxydable, muni d'une agitation magnétique et d'une régulation thermique par double enveloppe, on introduit à 30 °C, dans l'ordre: 1,6 NI d'hydrogène, 6 litres de propylène liquide, 30 millimoles de triéthylaluminium et 3 millimoles de cyclohexylméthyldiméthoxysilane (CHMDMS).

On laisse agir 10 minutes, puis 40 mg de la composante catalytique préparée au b) sont injectés dans le réacteur. La température est portée rapidement à 70 °C et maintenue pendant une heure à cette valeur. Le réacteur est ensuite refroidi a la température ambiante et la pression abaissée à la pression atmosphérique.

Le tableau 3 rassemble les résultats.

### Exemple 9

On procède comme pour l'exemple 8 sauf que l'on remplace le cyclohexylméthyldiméthoxysilane par la même quantité de dicyclopentyl diméthoxysilane (DCPDMS). La quantité d'hydrogène mis en oeuvre est dans ce cas de 3,2 NI.

Les résultats sont regroupés dans le tableau 3.

### Exemple 10

On procède comme pour l'exemple 8 sauf que la polymérisation est réalisée à 62°C. La quantité d'hydrogène mise en oeuvre est ici de 1,6 NL.

Les résultats sont regroupés dans le tableau 3.

### Exemple 11

On procède comme pour l'exemple 10 sauf que l'on remplace le CHMDMS par la même quantité de DCPDMS. La quantité d'hydrogène mise en oeuvre est ici de 3,2 NL.

Les résultats sont regroupés dans le tableau 3.

### Exemple 12

On répète l'exemple 8.

Les résultats sont regroupés dans le tableau 3.

### Exemples 13

On procède comme pour l'exemple 12 sauf que l'on remplace le CHMDMS par la même quantité de DCPDMS. La quantité d'hydrogène mise en oeuvre est ici de 3,2 NL.

Les résultats sont regroupés dans le tableau 3.

### Exemple 14

On procède comme pour l'exemple 12 sauf que l'on remplace le CHMDMS par la même quantité de phényltriéthoxysilane (PTES). La quantité d'hydrogène mise en oeuvre est ici de 1,6 NL.

Les résultats sont regroupés dans le tableau 3.

### Exemple 15

On procède comme pour l'exemple 12 sauf que l'on remplace le CHMDMS par la même quantité de di-isobutyldiméthoxysilane (DiBDMS). La quantité d'hydrogène mise en oeuvre est ici de 3,2 NL.

Les résultats sont regroupés dans le tableau 3.

### Exemple comparatif 6

On opère comme pour l'exemple 12 sauf que l'on introduit 660 g de di-n-butylphtalate lors de la préparation de la composante catalytique.

Les résultats sont regroupés dans le tableau 3.

### Exemple comparatif 7

On procède comme pour l'exemple comparatif 6 sauf que l'on remplace le CHMDMS par la même quantité de dicyclopentyldiméthoxysilane (DCPDMS). La quantité d'hydrogène mise en oeuvre est ici de 8 NL.

Les résultats sont regroupés dans le tableau 3.

### Exemple 16

### a)Préparation d'un support

Dans un réacteur agité, thermostaté à 40°C et purgé à l'azote, on introduit 50 ml d'une solution de MgCl2 dans le n-butanol (BuOH), telle que le rapport molaire BuOH/MgCl2 soit de 10. On additionne 200 ml d'une huile paraffinique de viscosité de 0,2 Pa.s mesurée à 20°C. L'agitation est portée à une vitesse telle que la vitesse linéaire en bout de pâle soit de 120 m/s. On laisse le mélange biphasique sous agitation pendant 5 minutes, puis on ajoute rapidement en une seule fois 125 ml de dioxane 1-4. La précipitation du complexe MgCl2-dioxane est immédiate. Après filtration, lavage à l'hexane et séchage sous courant d'azote, on récupère environ 14 g d'une poudre blanche pulvérulente dont la composition est de 67 % en poids de dioxane 1-4 et de 33 % en poids de MgCl2. Ce solide est ensuite traité par une solution de triéthylaluminium dans du toluène de telle façon que le rapport molaire Al/dioxane 1-4 soit de 2 et la concentration en aluminium de 1 mole par litre. Après filtration, lavages à l'hexane et séchage du solide, on obtient une poudre dont la morphologie est conservée. On met en suspension 4,5 g du solide ainsi obtenu dans 50 ml d'hexane à 40°C. On injecte alors 6 ml de tétrahydrofurane avec un débit de 30 ml/h sous une agitation de 200 révolutions par min. Après l'injection du THF, on laisse la solution au repos pendant 15 minutes sous une agitation ralentie. On procède ensuite à une filtration et à 4 lavages à l'hexane. Le solide est séché sous courant d'azote à 70°C pendant 1 heure. On récupère 8 g d'un solide contenant 14,5% en poids de magnésium et 43,2% en poids de THF.

### b)Préparation d'une composante catalytique

Dans un réacteur de 300 ml purgé à l'azote muni d'une agitation tournant à 200 révolutions par minute, on introduit les 8 g du support obtenu au a), 20 ml de toluène et 58 ml de TiCl4 pur. La température est portée à 90°C et on introduit alors 0,16 ml de di-n-butylphtalate. Le traitement se poursuit pendant 2 heures. Après filtration, on réalise une deuxième série de traitements laquelle consite à réaliser quatre fois ce qui suit: on ajoute sur le solide résultant 4 ml de TiCl4 et 76 ml de toluène, on porte la température à 100°C pendant 1 heure et l'on procède à une filtration. Le solide est ensuite lavé 3 fois avec 80 ml d'hexane à 60°C pendant 10 minutes. Le solide est enfin séché sous courant d'azote à 60°C pendant 2 heures. La composante catalytique se présente sous la forme d'une poudre pulvérulente de granulométrie et de morphologie contrôlées. La composante catalytique contient 3,7% en poids de titane, 20,3% en poids de magnésium et 2,2% en poids de di-n-butylphtalate.

### c)Polymérisation en présence de la composante catalytique

Dans un réacteur de 3,5 litres en acier inoxydable, muni d'une agitation magnétique et d'une régulation thermique par double enveloppe, on introduit à 30 °C, dans l'ordre: 0,7 NI d'hydrogène, 2,4 litres de propylène liquide, 24 millimoles de triéthylaluminium et 2,4 millimoles de cyclohexylméthyldiméthoxysilane (CHMDMS).

On laisse agir 10 minutes, puis, 20 mg de la composante catalytique préparée précédemment sont injectés dans le réacteur. La température est portée rapidement à 70 °C et maintenue pendant une heure à cette valeur.

A la fin de la réaction, le réacteur est refroidi et la pression abaissée à la pression atmosphérique. On récupère 304 grammes d'une poudre d'indice d'isotacticité de 92,6% en poids.

Les résultats sont regroupés dans le tableau 4.

### Exemple comparatif 8

On opère comme pour l'exemple 16 sauf que l'on introduit 1,04 ml de di-n-butylphtalate lors de la préparation de la composante catalytique.

Les résultats sont regroupés dans le tableau 4.

### Exemple 17

### a)Préparation d'un support

Dans un broyeur à billes en acier inoxydable, de volume utile de 400 ml, purgé à l'azote, on introduit 20 g de MgCl₂ anhydre commercial. Il est broyé pendant 6 heures à l'aide de billes de diamètre variant de 6 à 16 mm et de poids total 175 g. On met en suspension 15 g du solide ainsi obtenu dans 165 ml d'hexane à 40°C. On injecte alors 60 ml de tétrahydrofurane avec un débit de 30 ml/h sous une agitation de 200 révolutions par minute. Après l'injection du THF, on laisse la solution au repos pendant 15 minutes sous une agitation ralentie. On procède ensuite à une filtration et à 4 lavages à l'hexane. Le solide est séché sous courant d'azote à 70°C pendant 1 heure. On récupère 28,7 g d'un solide contenant 10,8% en poids de magnésium et 44,6% en poids de THF.

### b)Préparation d'une composante catalytique

Dans un réacteur de 300 ml purgé à l'azote muni d'une agitation tournant à 200 révolutions par minute, on introduit les 8 g du solide traité précédemment, 26 ml de toluène et 78 ml de TiCl4 pur. La température est portée à 90°C et on introduit alors 0,81 ml de di-n-butylphtalate. Le traitement se poursuit pendant 2 heures. Après filtration, on réalise une deuxième série de traitements laquelle consiste à réaliser cinq fois consécutivement ce qui suit: on ajoute sur le solide résultant 10,5 ml de TiCl4 et 93,5 ml de toluène, on porte la température à 100°C pendant 1 heure et l'on procède à une filtration. Le solide est ensuite lavé 3 fois avec 80 ml d'hexane à 60°C pendant 10 minutes. Le solide est enfin séché sous courant d'azote à 60°C pendant 2 heures. La composante catalytique se présente sous la forme d'une poudre pulvérulente. La composante catalytique contient 3,1% en poids de titane, 21% en poids de magnésium et 5,2% en poids de di-n-butylphtalate.

### c)Polymérisation en présence de la composante catalytique

Dans un réacteur de 3,5 litres en acier inoxydable, muni d'une agitation magnétique et d'une régulation thermique par double enveloppe, on introduit à 30 °C, dans l'ordre: 1,2 NI d'hydrogène, 2,4 litres de propylène liquide, 24 millimoles de triéthylaluminium et 2,4 millimoles de cyclohexylméthyldiméthoxysilane (CHMDMS).

Après un précontact de 10 minutes, 20 mg de la composante catalytique préparée précédemment sont injectés dans le réacteur. La température est portée rapidement à 70 °C et maintenue pendant une heure à cette valeur.

A la fin de la réaction, le réacteur est refroidi et la pression abaissée à la pression atmosphérique. On récupère 647 grammes d'une poudre d'indice d'isotacticité de 94,6% en poids.

Les résultats sont regroupés dans le tableau 5.

### Exemple comparatif 9

On opère comme pour l'exemple 17 sauf que l'on introduit 1,36 ml de di-n-butylphtalate lors de la préparation de la composante catalytique.

Les résultats sont regroupés dans le tableau 5.

### Exemple 18

La composante catalytique préparée à l'exemple 12 est engagée en polymérisation de l'éthyléne dans les conditions qui suivent.

Dans un réacteur de 4 litres muni d'une régulation de température et d'un système d'agitation, on introduit sous atmosphère d'azote et à température ambiante 1,5 litre d'hexane, puis 2,8 ml de triisobutylaluminium (TIBA) puis 1 ml d'une suspension dans l'hexane de 7 mg de la composante catalytique de l'exemple 16.

Le réacteur est pressurisé par 2 bars d'azote puis sa température est portée à 75°C. On introduit alors 4 bars d'hydrogène et 7 bars d'éthylène. La pression est maintenue constante par addition en continu d'éthylène pendant 3 heures, à la suite de quoi l'injection d'éthylène est stoppée et le réactreur est refroidi à 25° C . Le polymère est désactivé par ajout d'une solution de méthanol acide. Après filtration et séchage à 80° C, le polymère est récupéré.

Le tableau 6 rassemble les résultats.

### Exemple 19

On procède comme pour l'exemple 18, sauf que la polymérisation a été réalisée à 85° C.

Le tableau 6 rassemble les résultats.

### Exemple comparatif 10

On procède comme pour l'exemple 18, sauf que l'on utilise la composante catalytique solide de l'exemple comparatif 6. Le tableau 6 rassemble les résultats.

### Exemple comparatif 11

On procède comme pour l'exemple 19, sauf que l'on utilise la composante catalytique solide de l'exemple comparatif 6. Le tableau 6 rassemble les résultats.

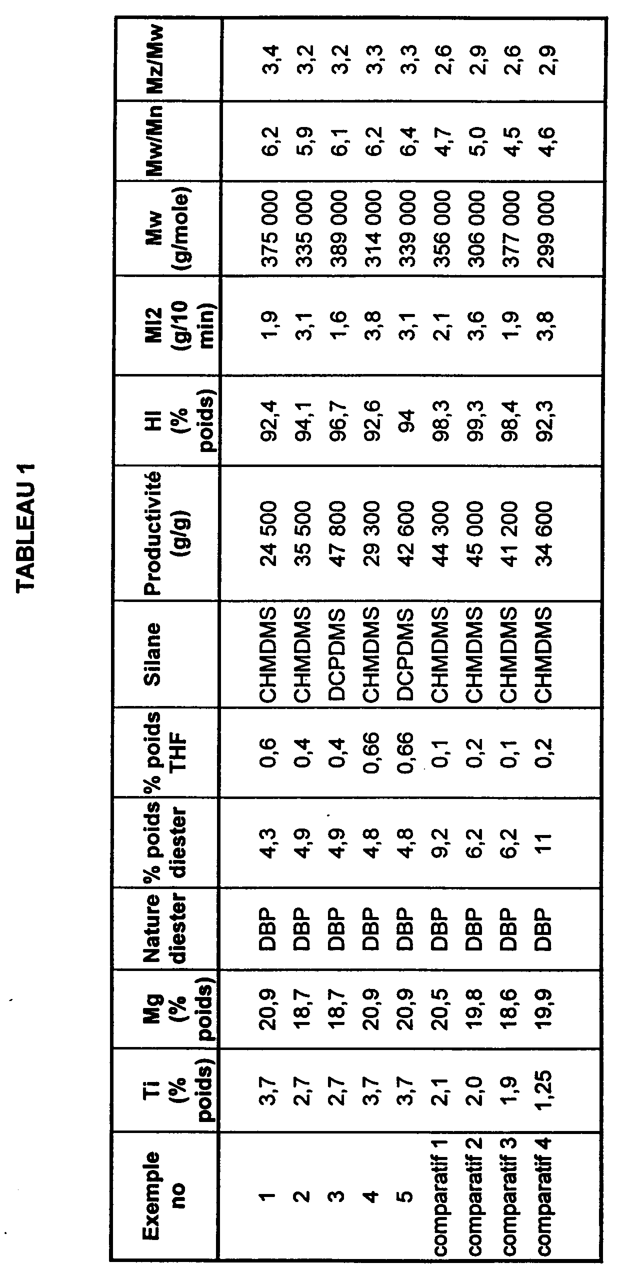

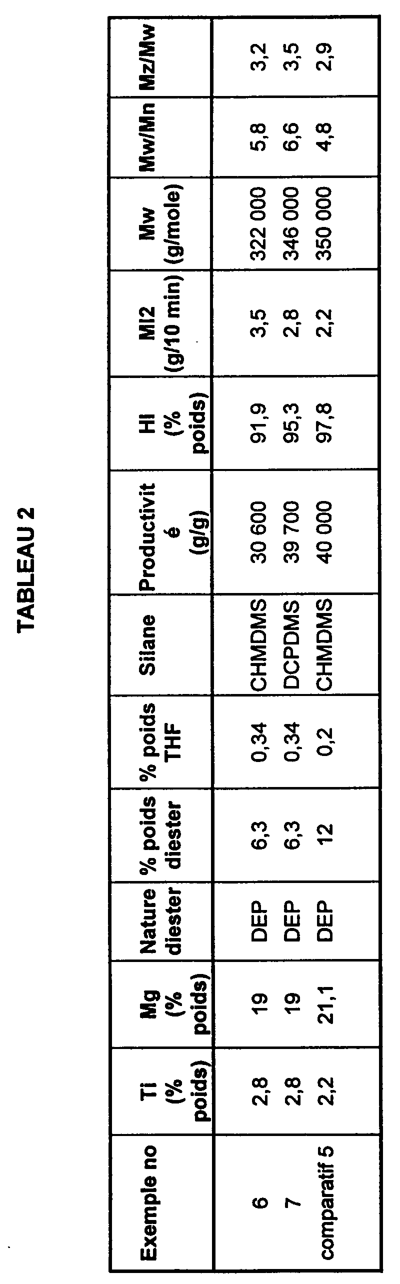

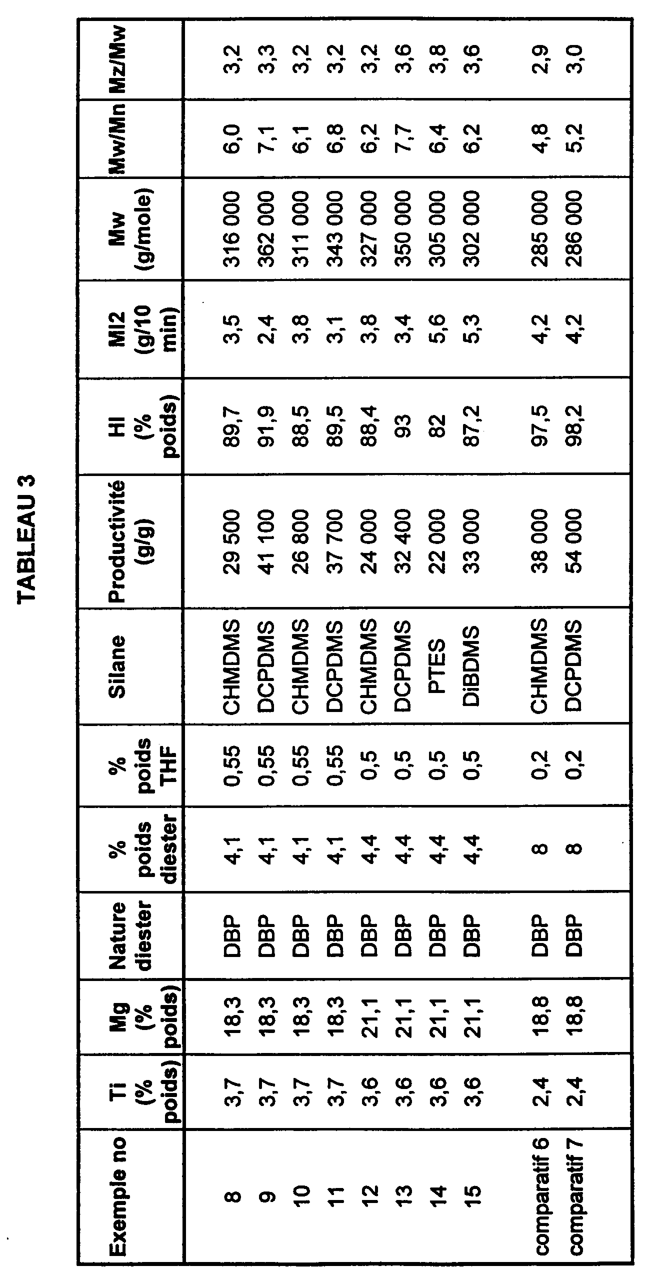

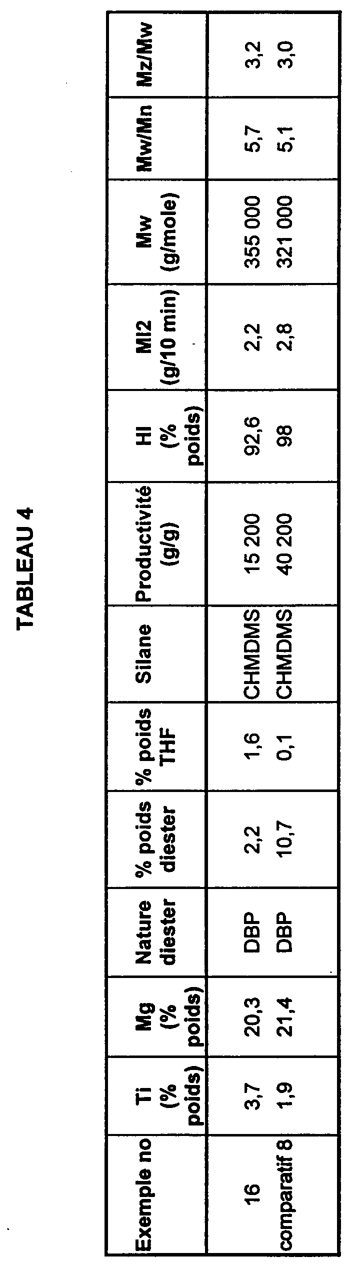

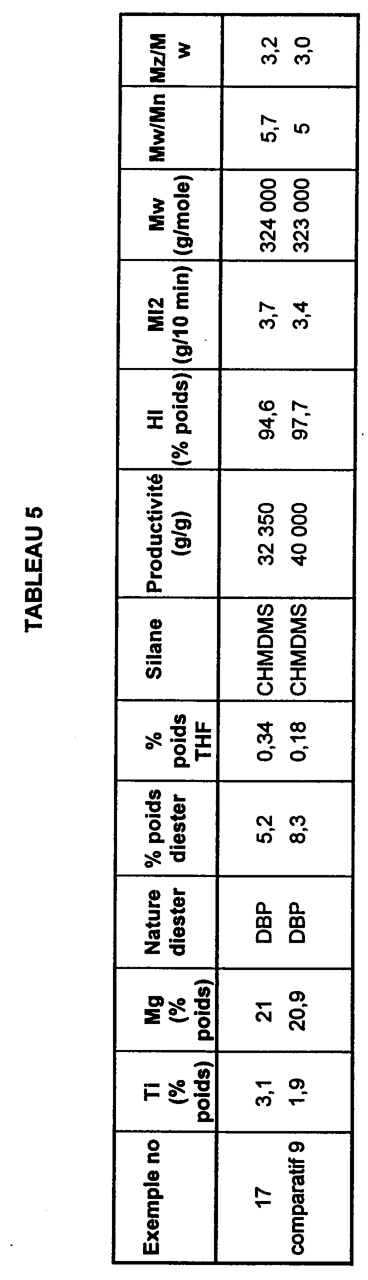

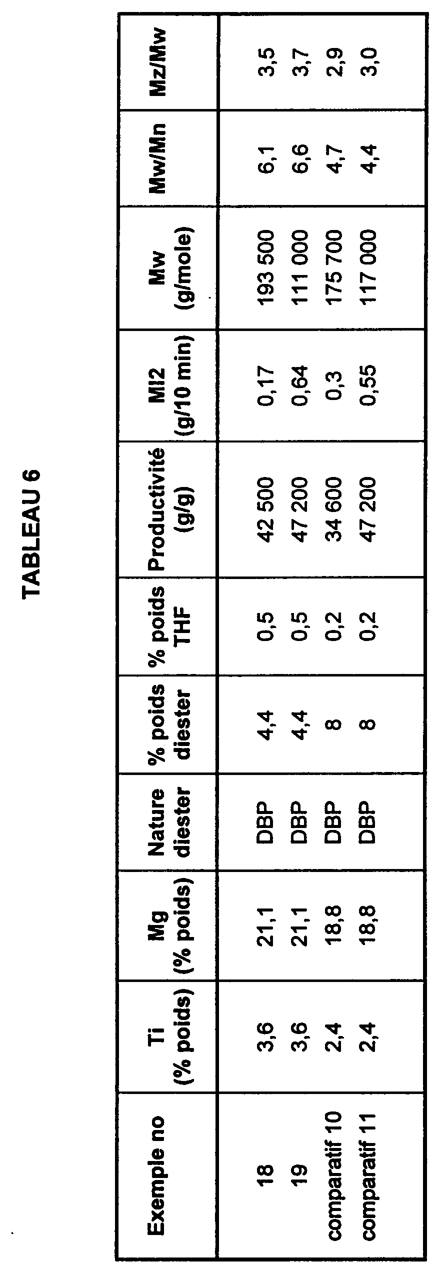

## Revendications

1. **.** Composante catalytique solide sur support MgCl₂ contenant des atomes de titane, et un diester de l'acide phtalique dont les groupements hydrocarbonés des fonctions esters, pouvant êre identiques ou différents, contiennent de un à huit atomes de carbone, caractérisée en ce que le titane est présent à raison d'au moins 2,5 % en poids et en ce que le diester de l'acide phtalique est présent à raison de moins de 7 % en poids.

2. Composante selon la revendication 1 caractérisée en ce qu'elle comprend au-moins 60 % en poids de MgCl₂.

3. Composante selon la revendication 1 ou 2 caractérisée en ce qu'elle est obtenue par mise en contact entre :
- un complexe (MgCl₂ solvant complexant),
- un dérivé du titane,
- le diester de l'acide phtalique.

4. Composante selon l'une des revendications 1 à 3 caractérisée en ce que le titane est présent à raison de 3 à 5 % en poids.

5. Composante selon l'une des revendications 1 à 4 caractérisée en ce que le diester est présent à raison de plus de 2 % en poids.

6. Composante selon la revendication 5 caractérisée en ce que le diester est présent à raison de 3 à 6 % en poids.

7. Composante selon l'une des revendications 1 à 6 caractérisée en ce que le titane est présent sous forme chlorée et sous le degré d'oxydation 3 et/ou 4.

8. Composante selon l'une des revendications 1 à 7 caractérisée en ce que le diester est un dibutylphtalate.

9. Composante selon l'une des revendications 1 à 8 caractérisée en ce qu'une base de Lewis est présente à raison de 0,01 à 8 % en poids.

10. Composante selon la revendication 9 caractérisée en ce que la base de Lewis est le tétrahydrofurane.

11. Composante selon la revendication 10 caractérisée en ce que le tétrahydrofurane est présent à raison de 0,3 à 1% en poids.

12. Procédé de fabrication d'une composante de l'une des revendications 1 à 11 caractérisée en ce que ladite composante est susceptible d'être obtenue par mise en contact entre :
- un complexe (MgCl_{2·}solvant complexant)
- un dérivé du titane
- un diester de l'acide phtalique dont les groupements hydrocarbonés des fonctions esters, pouvant être identiques ou différents, contiennent de un à huit atomes de carbone.

13. Procédé selon la revendication 12 caractérisé en ce que le rapport molaire solvant complexant sur MgCl₂ est compris entre 1 et 2.

14. Procédé selon la revendication 13 caractérisé en ce que le rapport molaire solvant complexant sur MgCl₂ est compris entre 1,4 et 1,7.

15. Procédé selon la revendication 13 ou 14 caractérisé en ce que le complexe est susceptible d'être obtenu par
- mise en présence entre MgCl₂ et le solvant complexant, le rapport molaire du solvant complexant sur MgCl₂ étant supérieur à 4, puis
- lavage par un solvant S.

16. Procédé selon la revendication 15 caractérisé en ce que la mise en présence est réalisée avec un rapport molaire solvant complexant sur MgCl₂ supérieur à 7.

17. Procédé selon la revendication 15 ou 16 caractérisé en ce que le solvant S est choisi parmi les hydrocarbures aliphatiques, alicycliques ou aromatiques.

18. Procédé selon l'une des revendications 12 à 17 caractérisé en ce que le solvant complexant est le tétrahydrofurane.

19. Procédé de polymérisation d'au moins une oléfine en présence d'une composante catalytique solide de l'une des revendications 1 à 11 et d'un cocatalyseur.

20. Procédé selon la revendication 19 caractérisé en ce que le cocatalyseur est un dérivé organique de l'aluminium.

21. Procédé selon la revendication 20 caractérisé en ce que la polymérisation est réalisée en présence d'un silane de formule Si R¹R²R³R⁴ dans laquelle l'un au moins des groupements liés au silicium est un groupement alkoxyde de formule (-OR⁵) dans laquelle R⁵ représente un groupement hydrocarbone saturé linéaire contenant de 1 à 4 atomes de carbone, et de préférence 1 ou 2 atomes de carbone, les autres groupements liés au silicium étant des groupements hydrocarbonés contenant de 1 à 8 atomes de carbone, l'un au moins de ces groupements comprenant au moins quatre atomes de carbone.

22. Procédé selon la revendication 21 caractérisé en ce que le silane contient deux groupements alkoxyde de formule (-OR⁵) pouvant être identiques ou différents.

23. Procédé selon la revendication 22 caractérisé en ce que le silane contient au moins un radical cyclopentyle.

24. Procédé selon la revendication 23 caractérisé en ce que le silane est le dicyclopentyldiméthoxysilane.

25. Procédé selon l'une des revendications 21 à 24 caractérisé en ce que le rapport molaire Al/Si est compris entre 5 et 200 et de préférence entre 10 et 80.

26. Procédé selon l'une des revendications 19 à 25 caractérisé en ce qu'au moins une oléfine est le propylène.

27. Procédé selon la revendication 26 caractérisé en ce que seul le propylène est polymérisé.

28. Procédé selon l'une des revendications 19 à 25 caractérisé en ce qu'au moins une oléfine est l'éthylène.

29. Procédé selon la revendication 28 caractérisé en ce que seul l'éthyléne est polymérisé.

## Claims

1. Solid catalyst component on MgCl₂ support containing titanium atoms and a diester of phthalic acid in which the hydrocarbon groups in the ester functional groups, which may be identical or different, contain from one to eight carbon atoms, characterized in that the titanium is present in a proportion of at least 2.5 % by weight and in that the diester of phthalic acid is present in a proportion of less than 7 % by weight.

2. Component according to Claim 1, characterized in that it includes at least 60 % by weight of MgCl₂.

3. Component according to Claim 1 or 2, characterized in that it is obtained by bringing into contact:
- a (MgCl₂ ·complexing solvent) complex,
- a titanium derivative,
- the diester of phthalic acid.

4. Component according to one of Claims 1 to 3, characterized in that the titanium is present in a proportion of 3 to 5 % by weight.

5. Component according to one of Claims 1 to 4, characterized in that the diester is present in a proportion of more than 2 % by weight.

6. Component according to Claim 5, characterized in that the diester is present in a proportion of 3 to 6 % by weight.

7. Component according to one of Claims 1 to 6, characterized in that the titanium is present in chlorinated form and in the oxidation state 3 and/or 4.

8. Component according to one of Claims 1 to 7, characterized in that the diester is a dibutyl phthalate.

9. Component according to one of Claims 1 to 8, characterized in that a Lewis base is present in a proportion of 0.01 to 8 % by weight.

10. Component according to Claim 9, characterized in that the Lewis base is tetrahydrofuran.

11. Component according to Claim 10, characterized in that tetrahydrofuran is present in a proportion of 0.3 to 1 % by weight.

12. Process for the manufacture of a component of one of Claims 1 to 11, characterized in that the said component is capable of being obtained by contact between:
- a (MgCl₂ ·complexing solvent) complex
- a titanium derivative
- a diester of phthalic acid in which the hydrocarbon groups in the ester functional groups, which may be identical or different, contain from one to eight carbon atoms.

13. Process according to Claim 12, characterized in that the molar ratio of complexing solvent to MgCl₂ is between 1 and 2.

14. Process according to Claim 13, characterized in that the molar ratio of complexing solvent to MgCl₂ is between 1.4 and 1.7.

15. Process according to Claim 13 or 14, characterized in that the complex is capable of being obtained by
- bringing MgCl₂ and the complexing solvent into contact, the molar ratio of the complexing solvent to MgCl₂ being higher than 4, and then
- washing with a solvent S.

16. Process according to Claim 15, characterized in that the contact is produced with a molar ratio of complexing solvent to MgCl₂ which is higher than 7.

17. Process according to Claim 15 or 16, characterized in that the solvent S is chosen from aliphatic, alicyclic and aromatic hydrocarbons.

18. Process according to one of Claims 12 to 17, characterized in that the complexing solvent is tetrahydrofuran.

19. Process for the polymerization of at least one olefin in the presence of a solid catalyst component of one of Claims 1 to 11 and of a cocatalyst.

20. Process according to Claim 19, characterized in that the cocatalyst is an organic aluminium derivative.

21. Process according to Claim 20, characterized in that the polymerization is carried out in the presence of a silane of formula SiR¹R²R³R⁴ in which at least one of the groups bonded to silicon is an alkoxy group of formula (-OR⁵) in which R⁵ denotes a linear saturated hydrocarbon group containing from 1 to 4 carbon atoms and preferably 1 or 2 carbon atoms, the other groups bonded to silicon being hydrocarbon groups containing from 1 to 8 carbon atoms, at least one of these groups containing at least four carbon atoms.

22. Process according to Claim 21, characterized in that the silane contains two alkoxy groups of formula (-OR⁵) which may be identical or different.

23. Process according to Claim 22, characterized in that the silane contains at least one cyclopentyl radical.

24. Process according to Claim 23, characterized in that the silane is dicyclopentyldimethoxysilane.

25. Process according to one of Claims 21 to 24, characterized in that the Al/Si molar ratio is between 5 and 200 and preferably between 10 and 80.

26. Process according to one of Claims 19 to 25, characterized in that at least one olefin is propylene.

27. Process according to Claim 26, characterized in that only propylene is polymerized.

28. Process according to one of Claims 19 to 25, characterized in that at least one olefin is ethylene.

29. Process according to Claim 28, characterized in that only ethylene is polymerized.

## Patentansprüche

1. Fester Katalysatorbestandteil auf einem MgCl₂-Träger, enthaltend Titanatome und einen Phthalsäurediester, wobei die Kohlenwasserstoffgruppe der Esterfunktionen, identisch oder verschieden, eins bis acht Kohlenstoffatome enthalten, dadurch gekennzeichnet, daß das Titan in Mengen von mindestens 2,5 Gew.-% und der Phthalsäurediester in Mengen von weniger als 7 Gew.-% vorhanden ist.

2. Katalysatorbestandteil nach Anspruch 1, dadurch gekennzeichnet, daß er mindestens 60 Gew.-% MgCl₂ umfaßt.

3. Katalysatorbestandteil nach Anspruch 1 oder 2, dadurch gekennzeichnet, daß er erhalten ist durch Inkontaktbringen von:
- einem Komplex (MgCl₂/komplexierendes bzw. komplexbildendes Lösungsmittel),
- einem Titanderivat und
- dem Phthalsäurediester.

4. Katalysatorbestandteil nach einem der Ansprüche 1 bis 3, dadurch gekennzeichnet, daß das Titan in Mengen von 3 bis 5 Gew.-% vorliegt.

5. Katalysatorbestandteil nach einen, der Ansprüche 1 bis 4, dadurch gekennzeichnet, daß das Titan in Mengen von mehr als 2 Gew.-% vorliegt.

6. Katalysatorbestandteil nach Anspruch 5, dadurch gekennzeichnet, daß der Diester in Mengen von 3 bis 6 Gew.-% vorliegt.

7. Katalysatorbestandteil nach einen der Ansprüche 1 bis 6, dadurch gekennzeichnet, daß das Titan in chlorierter Form und in der Oxidationsstufe 3 und/oder 4 vorliegt.

8. Katalysatorbestandteil nach einem der Ansprüche 1 bis 7, dadurch gekennzeichnet, daß der Diester ein Dibutylphthalat ist.

9. Katalysatorbestandteil nach einem der Ansprüche 1 bis 8, dadurch gekennzeichnet, daß eine Lewis-Base von 0,01 bis 8 Gew.-% vorhanden ist.

10. Katalysatorbestandteil nach Anspruch 9, dadurch gekennzeichnet, daß die Lewis-Base Tetrahydrofuran ist.

11. Katalysatorbestandteil nach Anspruch 10, dadurch gekennzeichnet, daß das Tetrahydrofuran in Mengen von 0,3 bis 1 Gew.-% vorhanden ist.

12. Verfahren zur Herstellung eines Katalysatorbestandteils nach einem der Ansprüche 1 bis 11, dadurch gekennzeichnet, daß der Katalysatorbestandteil erhältlich ist durch Inkontaktbringen von:
- einem Komplex (MgCl₂·komplexierendes Lösungsmittel),
- einem Titanderivat und
- einem Phthalsäurediester, wobei die Kohlenwasserstoffgruppen der Esterfunktionen, identisch oder verschieden, eins bis acht Kohlenstoffatome enthalten.

13. Verfahren nach Anspruch 12, dadurch gekennzeichnet, daß das Molverhältnis von komplexierendem Lösungsmittel zu MgCl₂ zwischen 1 und 2 liegt.

14. Verfahren nach Anspruch 13, dadurch gekennzeichnet, daß das Molverhältnis von komplexierendem Lösungsmittel zu MgCl₂ zwischen 1,4 und 1,7 liegt.

15. Verfahren nach Anspruch 13 oder 14, dadurch gekennzeichnet, daß der Komplex erhältlich ist durch Inkontaktbringen durch:
- Zusammenbringen von MgCl₂ und dem komplexbildenden Lösungsmittel, wobei das Molverhältnis von komplexbildendem Lösungsmittel zu MgCl₂ mehr als 4 beträgt, dann
- Waschen mit einen, Lösungsmittel S.

16. Verfahren nach Anspruch 15, dadurch gekennzeichnet, daß das Zusammenbringen mit einem Molverhältnis von komplexierendem Lösungsmittel zu MgCl₂ von mehr als 7 erfolgt.

17. Verfahren nach Anspruch 15 oder 16, dadurch gekennzeichnet, daß das Lösungsmittel S aus aliphatischen, alicyclischen oder aromatischen Lösungsmitteln ausgewählt wird.

18. Verfahren nach einem der Ansprüche 12 bis 17, dadurch gekennzeichnet, daß das komplexbildende Lösungsmittel Tetrahydrofuran ist.

19. Verfahren zur Polymerisation mindestens eines Olefins in Gegenwart eines festen Katalysatorbestandteils nach einem der Ansprüche 1 bis 11, und eines Cokatalysators.

20. Verfahren nach Anspruch 19, dadurch gekennzeichnet, daß der Cokatalysator ein organisches Aluminiumderivat ist.

21. Verfahren nach Anspruch 20, dadurch gekennzeichnet, daß die Polymerisation in Gegenwart eines Silans der Formel Si R¹R²R³R⁴ durchgeführt wird, wobei mindestens eine der an das Silicium gebundenen Gruppen eine Alkoxigruppe der Formel (-OR⁵) ist, in der R⁵ eine lineare gesättigte Kohlenwasserstoffgruppe mit 1 bis 4 Kohlenstoffatomen, vorzugsweise mit 1 oder 2 Kohlenstoffatomen, darstellt, wobei die übrigen an das Silicium gebundenen Gruppen Kohlenwasserstoffgruppen mit 1 bis 8 Kohlenstoffatomen sind, von denen mindestens eine mindestens vier Kohlenstoffatome aufweist.

22. Verfahren nach Anspruch 21, dadurch gekennzeichnet, daß das Silan zwei Alkoxigruppen der Formel (-OR⁵) enthält, die identisch oder verschieden sein können.

23. Verfahren nach Anspruch 22, dadurch gekennzeichnet, daß das Silan mindestens einen Cyclopentylrest enthält.

24. Verfahren nach Anspruch 23, dadurch gekennzeichnet, daß das Silan Dicyclopentyldimethoxysilan ist.

25. Verfahren nach einem der Ansprüche 21 bis 24, dadurch gekennzeichnet, daß das Al/Si-Molverhältnis zwischen 5 und 200, vorzugsweise zwischen 10 und 80, liegt.

26. Verfahren nach einem der Ansprüche 19 bis 25, dadurch gekennzeichnet, daß mindestens ein Olefin Propylen ist.

27. Verfahren nach Anspruch 26, dadurch gekennzeichnet, daß nur Propylen polymerisiert wird.

28. Verfahren nach einem der Ansprüche 19 bis 25, dadurch gekennzeichnet, daß mindestens ein Olefin Ethylen ist.

29. Verfahren nach Anspruch 28, dadurch gekennzeichnet, daß nur Ethylen polymerisiert wird.
